Europäisches Patentamt

European Patent Office

Office européen des brevets

(11) Publication number: **0 342 727**
**A2**

(12) **EUROPEAN PATENT APPLICATION**

(21) Application number: **89201023.2**

(51) Int. Cl.⁴: **B60C 7/10 , B60C 15/02**

(22) Date of filing: **20.04.89**

| | |
|---|---|
| The title of the invention has been amended (Guidelines for Examination in the EPO, A-III, 7.3). | (71) Applicant: **CLABER S.P.A.** **Via Pontebbana, 22** **I-33080 Fiume Veneto Pordenone(IT)** |
| (30) Priority: **17.05.88 IT 2059888** | (72) Inventor: **Roman, Gianfranco** **Via Coletti, 24** **I-33087 Pasiano (Pordenone)(IT)** |
| (43) Date of publication of application: **23.11.89 Bulletin 89/47** | |
| (84) Designated Contracting States: **AT BE CH DE ES FR GB GR IT LI LU NL SE** | (74) Representative: **Mittler, Enrico et al** **c/o Marchi & Mittler s.r.l. Viale Lombardia, 20** **I-20131 Milano(IT)** |

(54) **Wheel with tyre for garden vehicles.**

(57) The wheel consists of a rim formed by two coupled circular flanges (1) and of a tyre element formed by an internal ring (2) of foam plastic material and by an external annular cover (3).

Fig.2

## Wheel with tyre for garden vehicles, such as hose winders, wheelbarrows and so on

The present invention relates to a wheel with tyre for garden vehicles, such as hose winders, wheelbarrows and so on.

Wheels with tyres for the above use are currently of two types: with inner tube and tyre and of solid rubber.

The wheels with inner tube and tyre have several drawbacks such as the possibility of punctures, the need for a special high-technology tyre with reinforcing plys and metal straps, the consequent high cost.

Solid rubber wheel are in turn heavy, rigid, costly, have difficulty in going over obstacles, cannot exceed certain maximum dimensions as would be required to avoid getting bogged down in soft, yielding terrains, which have just been ploughed.

In view of this state of the art, object of the present invention is to accomplish a wheel with tyre for garden vehicles, which is to be soft, light, with reduced cost, suitable for large dimensions, with no problems of punctures.

According to the invention such object is attained with a wheel with tyre comprising a rim and a tyre element surrounding said rim, characterized in that said tyre element is formed by an inner ring of foam plastic material and by an external annular cover of rubber wound round said ring.

In addition the rim is preferably accomplished in the form of two circular flanges coupled and secured one to the other, between which the internal annular edges of the outer cover are tightened and blocked.

There is thus obtained a wheel with tyre having no possiiblity of punctures, soft, light, with low cost, suitable for large dimensions.

One embodiment according to the invention is illustrated for greater clarity the enclosed drawings, wherein:

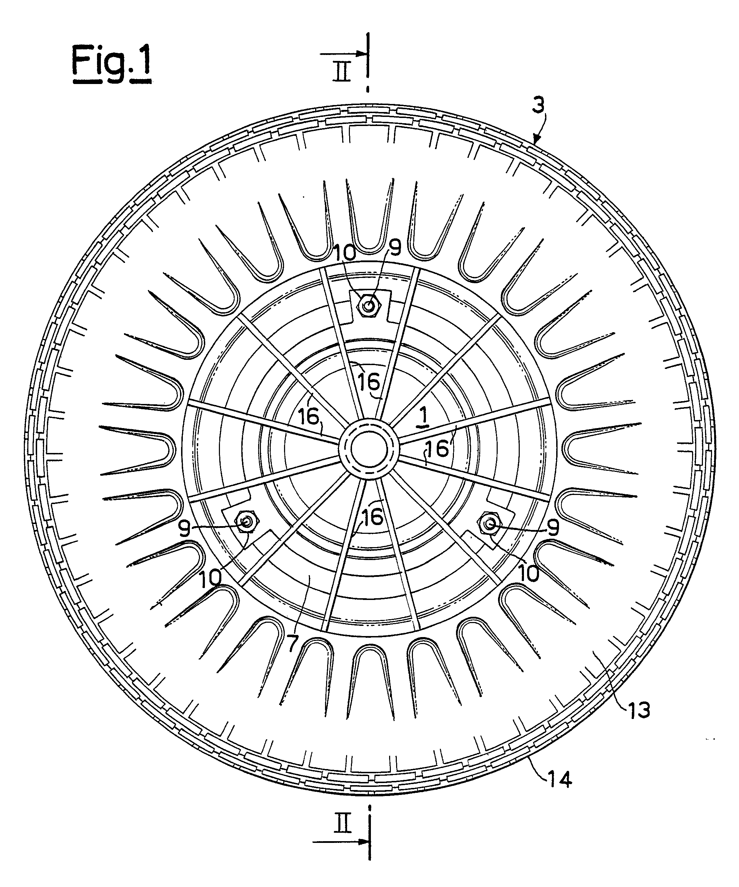

Fig. 1 shows the wheel in a front view;

Fig. 2 shows the wheel in a diametral cross-section taken along the line II-II of Fig. 1;

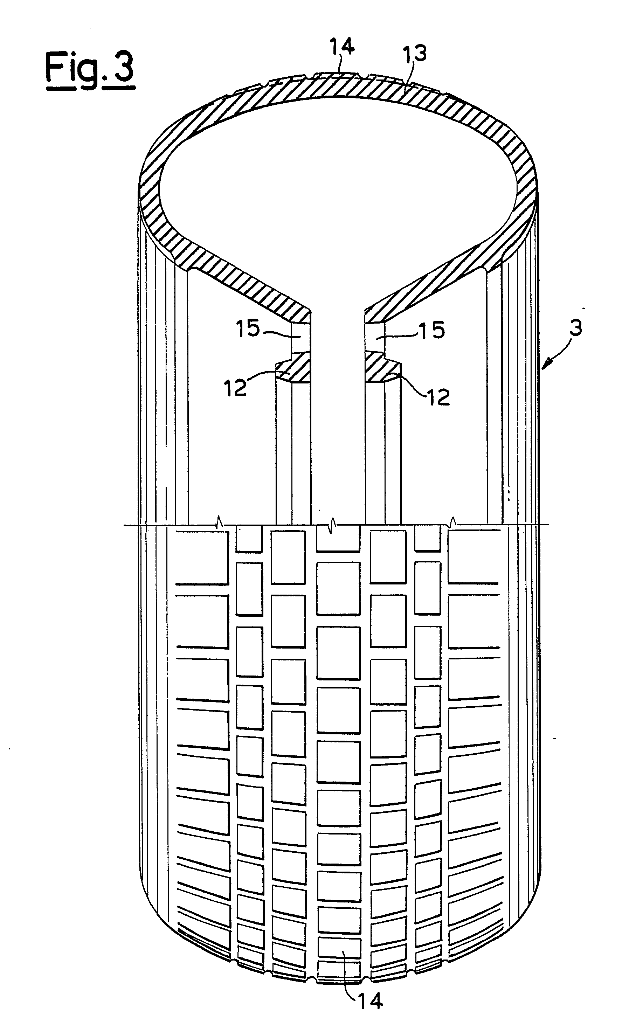

Fig. 3 shows the external rubber cover of the above wheel, half as a view and half as a cross-section as in Fig. 2;

Fig. 4 shows a diametral cross-section of one of the two circular flanges constituting the wheel rim of Fig.s1 and 2.

In the drawings there is shown a wheel with tyre for garden vehicles, which comprises a rim formed by two circular flanges 1 joined and fastened one to the other and a tyre element constituted by an internal ring 2 of polyurethane foam and by an external annular rubber cover 3 wound round said ring.

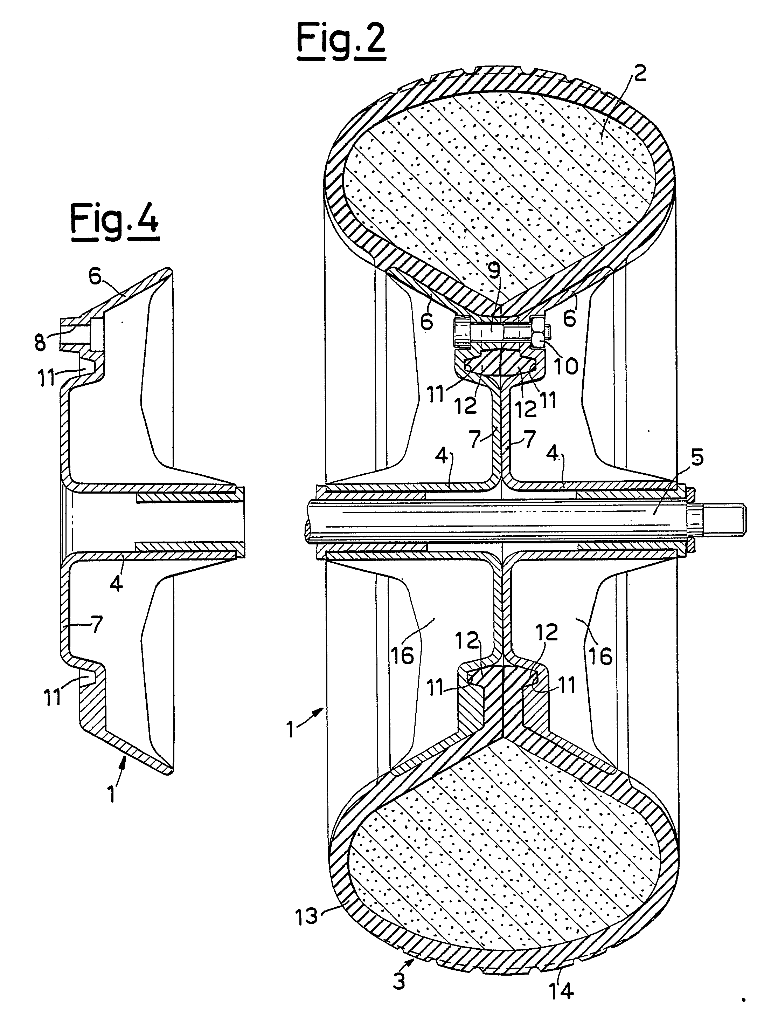

The two flanges 1 are symmetrical one to the other and, as shown in Fig. 4, each of them includes a central hub 4 for the passage of a supporting shaft 5, an external annular wall 6 at an angle so that it defines with the corresponding wall 6 of the other flange 1 an annular peripheral groove with a V-section for holding the ring 2 and the cover 3, and lastly a radial wall 7 connecting with reinforcing ribs 16, provided with holes 8 distanced along the circumference for fastening the two flanges 1 by means of bolts 9 with nuts 10 (Fig. 2).

Near said holes 8 the flanges 1 have respective annular grooves 11,in which are engaged respective internal turned-over annular edges 12 of the cover 3, otherwise with a C-shaped section 13 provided with a tread 14 as shown in Fig.s 2 and 3. Aligned holes 15 are in addition provided in the covers 3 for the passage of the bolts 9.

As shown in Fig. 2, with the turned-over edges 12 inserted in the annular grooves 11 of the rim flanges 1 and the bolts 9 passing through the holes 8 of the flanges 1 and the holes 15 of the covers 3, the above-mentioned edges of the covers 3 are clamped and locked between the two flanges 1 and round the polyurethan ring 2, thus allowing for the necessary grip of the cover 3 on the rim 1 and around the ring 2.

## Claims

1. Wheel with tyre for garden vehicles, comprising a rim (1) and a tyre element (2, 3) placed round said rim, characterized in that said tyre element is formed by an inner ring (2) of foam plastic material and by an external annular cover (3) of rubber wound round said ring.

2. Wheel with tyre according to claim 1, characterized in that said ring (2) is accomplished in polyurethane foam.

3. Wheel with tyre according to claim 1, characterized in that said rim is formed by two symmetrical circular flanges (1) coupled and secured one to the other.

4. Wheel with tyre according to claim 3, characterized in that each of said rim flanges (1) comprises an external annular wall (6) at an angle so that it defines with the corresponding wall (6) of the other flange (1) an annular peripheral groove with a V-section for holding said ring (2) and said cover (3).

5. Wheel with tyre according to claim 4, characterized in that each of said rim flanges (1) also comprises a radial wall (7) which in the proximity of said annular wall (6) has holes (8) for securing the two flanges to one another and an annular groove (11) for receiving and locking a corresponding internal turned-down annular edge (12) of said cover (3).

## Fig.1

# Fig.2

# Fig.4

# Fig.3

14   13

15      15

12      12

3

14